# EUROPÄISCHE PATENTSCHRIFT

(11) **EP 2 212 753 B1**
(45) Veröffentlichungstag und Bekanntmachung des Hinweises auf die Patenterteilung: **04.05.2011**
(21) Anmeldenummer: 09749012.2
(22) Anmeldetag: 03.11.2009
(51) Int. Cl.: G05B 19/423, B25J 9/16

(54) **VERFAHREN ZUM ABFAHREN EINER VORGEGEBENEN BAHN DURCH EINEN MANIPULATOR, SOWIE STEUERVORRICHTUNG ZUR DURCHFÜHRUNG EINES SOLCHEN VERFAHRENS**
METHOD FOR ALLOWING A MANIPULATOR TO COVER A PREDETERMINED TRAJECTORY, AND CONTROL DEVICE FOR CARRYING OUT SAID METHOD
Procédé pour permettre à un manipulateur de parcourir une trajectoire donnée, ainsi que dispositif de commande pour la mise en oeuvre d' un tel procédé

(30) Priorität: 03.02.2009 DE 102009007181; 17.12.2008 DE 102008062622
(43) Veröffentlichungstag der Anmeldung: 04.08.2010
(73) Patentinhaber: KUKA Laboratories GmbH, 86165 Augsburg (DE)
(72) Erfinder: SCHREIBER, Günter, 86316 Friedberg-Derching (DE)
(74) Vertreter: Schlotter, Alexander Carolus Paul
(86) Internationale Anmeldenummer: PCT/EP2009/007874
(87) Internationale Veröffentlichungsnummer: WO 2010/069430

(56) Entgegenhaltungen:
- ALBU-SCHAFFER A ET AL: "Programming by touch: the different way of human-robot interaction" IEEE TRANSACTIONS ON INDUSTRIAL ELECTRONICS, IEEE SERVICE CENTER, PISCATAWAY, NJ, USA, Bd. 50, Nr. 4, 1. August 2003 (2003-08-01) , Seiten 659-666, XP011098927 ISSN: 0278-0046
- BOJAN NEMEC ET AL: "Force Control of Redundant Robots in Unstructured Environment" IEEE TRANSACTIONS ON INDUSTRIAL ELECTRONICS, IEEE SERVICE CENTER, PISCATAWAY, NJ, USA, Bd. 49, Nr. 1, 1. Februar 2002 (2002-02-01), XP011023936 ISSN: 0278-0046

## Beschreibung

Die vorliegende Erfindung betrifft ein Verfahren zum Abfahren einer vorgegebenen Bahn durch einen Endeffektor eines Manipulators, insbesondere eines Roboters, eine Steuervorrichtung zur Durchführung eines solchen Verfahrens sowie einen Manipulator, insbesondere einen Roboter, mit einer solchen Steuervorrichtung.

Eine typische Aufgabe eines Manipulators besteht darin, mit seinem Endeffektor eine vorgegebene Bahn abzufahren. Dabei kann die Bahn beispielsweise durch direktes Programmieren ("direct teaching"), i.e. das manuelle Führen des Endeffektors in gewünschte Lagen in einem Lernmodus, oder durch indirektes Programmieren ("off-line programming"), i.e. die Erstellung von Soll-Verläufen der Gelenkwinkel entsprechend der inversen Kinematik der gewünschten Endeffektorlagen vorgegeben worden sein.

Die Lage umfasst dabei eine Position und/oder Orientierung des Endeffektors, die beispielsweise durch einem Vektor x ∈ Rⁿ der Dimension n beschrieben werden kann. Die Bahn des Endeffektors kann dann beispielsweise über einen Bahnparameter s parametrisiert werden (x = x(s)), den der Manipulator im normalen Betrieb entsprechend eines Zeitprofils ds/dt(t) abarbeitet, so dass der Endeffektor die Bahn mit einem entsprechenden Bahngeschwindigkeit dx/dt abfährt.

Da Manipulatoren, insbesondere Industrie- und Leichtbauroboter wie die Roboter der Baureihen LBR I-IV des Deutschen Zentrums für Luft- und Raumfahrt (DLR), in normalen Betrieb sehr schnell verfahren können und dies eine direkte Untersuchung einer Bahn oder einen rechtzeitigen manuellen Notstop bei fehlerhaften Bahnen erschwert, ist es betriebsintern bereits bekannt, die Bahngeschwindigkeit während des Abfahrens der Bahn durch einen Bediener manuell zu ändern, beispielsweise zu verringern, um bestimmte Bahnabschnitte zu untersuchen oder die Interaktion mit anderen Manipulatoren zu prüfen. Auf der anderen Seite können durch gezielte Vergrößerung der Bahngeschwindigkeit über den Normalbetrieb hinaus vorteilhafterweise sukzessive die dynamischen Grenzen des Manipulators ausgetestet werden.

Bisher wird diese Änderung der Bahngeschwindigkeit während des Betriebs ("override") manuell durch ein Bedienelement an einem Kontrollboard in die Steuerung des Manipulators eingegeben. Dies ist jedoch umständlich, insbesondere, wenn ein Bediener beispielsweise einen Fügeprozess eines Roboters aus der Nähe untersuchen und hierzu die Bahngeschwindigkeit entsprechend herabsetzen will. Denn in diesem Fall muss er mit einer Hand das Bedienelement betätigen.

Zusätzlich oder alternativ zur Bahngeschwindigkeit kann es wünschenswert sein, auch andere Prozessgrößen des Manipulators und/oder des von ihm durchgeführten Prozesses zu verändern. So sollen beispielsweise beim direkten Programmieren eines Füge- oder Schweißprozesses eine Andruckkraft des Manipulators bzw. ein Schweißstrom an einem Arbeitspunkt durch den Bediener einstellbar sein.

Aus dem Beitrag G. Grunwald, G. Schreiber, A. Albu-Schäffer, G. Hirzinger, "Programming by Touch: The Different Way of Human-Robot Interaction", IEEE Trans. On Industrial Electronics, Vol. 50, No. 4, 659- 666, August 2003, ist ein Verfahren nach dem Oberbegriff des Anspruchs 1 bekannt.

Die US 6,317,651 B1 schlägt vor, Singularitäten mit vorgeplanten Stellungen zu durchfahren, so dass keine Ablage zu einer geplanten Soll-Stellung auftritt. Die US 2002/0120363 A1 betrifft einen redundanten Fernsteuer-Master für einen Tele-Chirurgie-Roboter. Aus der DE 195 47 121 A1 ist eine analytische Rücktransformation vom kartesischen in den Gelenkkoordinatenraum bekannt. Die DE 10 2005 054 575 B3 regelt einen Chirurgie-Roboter an einer Einstichstelle momentenfrei. Die EP 1 728 600 B1 schlägt vor, einen Nullraum zur Optimierung des Energieverbrauchs zu nutzen.

Aufgabe der vorliegenden Erfindung ist es daher, eine komfortablere Änderung wenigstens einer Prozessgröße zu ermöglichen.

Diese Aufgabe wird durch ein Verfahren nach Anspruch 1 gelöst. Anspruch 13 stellt eine Vorrichtung zur Durchführung eines erfindungsgemäßen Verfahrens, Anspruch 15 einen Manipulator mit einer solchen Steuervorrichtung unter Schutz.

Ein Manipulator weist bezüglich einer vorgegebenen Bahn seines Endeffektors einen Lösungsraum auf, der alle Manipulatorstellungen umfasst, die derselben Endeffektorlage zugeordnet sind. Kann der Manipulator eine Endeffektorlage nicht darstellen, entartet der Lösungsraum zur leeren Menge. Ist beispielsweise eine dreidimensionale Position und Orientierung des Endeffektors im Raum, die durch je drei Koordinaten, etwa kartesische oder Polarkoordinaten bzw. Euler- oder Kardanwinkel beschrieben werden kann, durch einen sechsachsigen Manipulator eineindeutig realisierbar, enthält der Lösungsraum entsprechend nur eine Stellung.

Übersteigt die Anzahl f der Freiheitsgrade eines Manipulators jedoch die Dimension n der vorgegebenen Lage des Endeffektors um wenigstens 1 (f > n), ist dieser Manipulator bezüglich dieser vorgegebenen Bahn, gegebenenfalls mehrfach, redundant, i.e. sein Lösungsraum umfasst wenigstens zwei derselben Endeffektorlage zugeordneten Manipulatorstellungen. Ein solcher um mehrfache Stellungen erweiterte Lösungsraum wird im Folgenden als "Nullraum" bezeichnet. Dies kann zum einen daraus resultieren, dass der Manipulator sieben oder mehr Freiheitsgrade aufweist wie der vorstehend erwähnte Leichtbauroboter LBR III oder IV des DLR. Zum anderen kann die Dimension n der vorgegebenen Lage des Endeffektors auch kleiner als sechs sein, falls es beispielsweise auf die Orientierung des Endeffektors bezüglich einer Raumachse nicht ankommt, etwa beim Bohren in Richtung der letzten Drehachse eines sechsarmigen Industrieroboters. In diesem Fall ist der Manipulator bezüglich der Bahn, i.e. aufgabenredundant und enthält unendlich viele, derselben Endeffektorlage x ∈ R⁵ zugeordnete Manipulatorstellungen.

Die der vorliegenden Erfindung zugrundeliegende Idee besteht nun darin, eine solche Redundanz eines Manipulators auszunutzen, um eine oder mehrere Prozessgrößen des Manipulators zu ändern bzw. vorzugeben.

Dabei kann es sich um Prozessgrößen handeln, die einen von dem Manipulator durchgeführten Prozess (mit)bestimmen. Beispielsweise stellen der Schweißstrom einer vom Manipulator während eines Schweißprozesses geführten Schweißzange und deren Bahngeschwindigkeit den Schweißprozess (mit)bestimmende Prozessgrößen dar. Bei einem Fügeprozess stellt beispielsweise die Andruckkraft, mit der der Manipulator ein Werkstück fügt, eine den Fügeprozess (mit)bestimmende Prozessgröße dar. Bei einem Lackierprozess stellen wiederum die Bahngeschwindigkeit des Endeffektors des Manipulators sowie der Farbausstoß den Lackierprozess(mit)bestimmende Prozessgrößen dar. Im Folgenden wird die vorliegende Erfindung anhand der Bahngeschwindigkeit als Beispiel für eine zu ändernde Prozessgröße näher erläutert. Die vorliegende Erfindung ist jedoch nicht hierauf beschränkt - vielmehr können beliebige Prozessgrößen geändert werden. Der Begriff "Prozessgröße" im Sinne der vorliegenden Erfindung umfasst daher jede, insbesondere physikalische, Größe, die von einem Benutzer in Zusammenhang mit einem Manipulator einstell- bzw. veränderbar ist, beispielsweise die Helligkeit einer Lichtquelle, die vom Manipulator getragen wird und/oder dessen Arbeitsbereich beleuchtet, eine Temperatur einer Arbeitszelle des Manipulators, eine optische und/oder akustische Anzeige oder dergleichen.

In einer bevorzugten Ausführung der vorliegenden Erfindung wird der Endeffektor durch eine erfindungsgemäße Steuervorrichtung in an sich bekannter Weise stets in der vorgegebenen Lage entsprechend der vorgegebenen Bahn bewegt. Hierzu kann die Steuervorrichtung beispielsweise eine entsprechende Lageregelung für den Endeffektor aufweisen. Vorliegend umfasst der Begriff "Steuerung" daher auch eine Regelung, i.e. eine Ausgabe von Steuergrößen unter Berücksichtigung von Soll- und Ist-Größen und einer Regeldifferenz zwischen diesen.

Auch bei Änderung der Manipulatorstellung im Nullraum durch einen Bediener kann dabei weiterhin die vorgegebene Bahn nachgefahren werden. Hierzu sind verschiedene Ausführungen von Admittanz-Regelungen und Impedanz-Regelungen bekannt, die eine Bewegung des Manipulators durch den Bediener ermöglichen. Soll beispielsweise ein sechsarmiger Industrieroboter mit seinem Endeffektor eine Bahn nachfahren, bei der die Orientierung des Endeffektors bezüglich der letzten Drehachse des Roboters nicht vorgegeben ist, kann eine Positionsregelung für diese Drehachse durch entsprechende Wahl des Proportionalitätsfaktors eines reinen Proportionalreglers so weich geschaltet werden, dass ein Bediener den Endeffektor manuell um diese Achse drehen kann. Fährt der vorstehend genannte siebenachsige LBR III eine Bahn nach, kann ein Benutzer bei entsprechender Admittanz-Regelung beispielsweise den Ellbogen manuell aus seiner Position drücken, wobei die Admittanz-Regelung den Endeffektor weiterhin in einer durch drei Positions- und drei Winkelkoordinaten eindeutig vorgegebenen Lage entlang der vorgegebenen Bahn führt. Eine solche Bewegung des Manipulators durch den Bediener führt somit stets zu einer Ablage des Manipulators in seinem Nullraum, i.e. einer Differenz zwischen zwei Manipulatorstellungen des Nullraumes.

Erfindungsgemäß wird nun beim Abfahren einer vorgegebenen Bahn durch einen Endeffektor eines Manipulators, der bezüglich der vorgegebenen Bahn einen Nullraum mit wenigstens zwei derselben Endeffektorlage zugeordneten Manipulatorstellungen aufweist, i.e. bezüglich der vorgegebenen Bahn redundant ist, eine Ablage des Manipulators in dem Nullraum erfasst und wenigstens eine Prozessgröße, beispielsweise die Bahngeschwindigkeit des Endeffektors entsprechend der erfassten Ablage geändert.

Hierdurch kann also, ohne die Lage des Endeffektors bezüglich der abzufahrenden Bahn zu verändern, die Prozessgröße auf einfache und direkte Weise verändert werden, indem die Ablage des Manipulators im Nullraum als Maß einer gewünschten Prozessgrößenänderung genutzt wird. Der Bediener kann den Manipulator direkt anfassen und muss zur Prozessgrößenänderung kein Bedienelement eines Kontrollboardes oder dergleichen betätigen.

Eine solche Befehlseingabe kann vorteilhafterweise intuitiv bedient werden. Beispielsweise kann das Bewegen des Manipulators in Richtung der Bahn die Geschwindigkeit erhöhen, entgegen der Bahnrichtung reduzieren oder sogar ihr Vorzeichen ändern, so dass der Endeffektor auf der vorgegebenen Bahn rückwärts fährt. Gleichermaßen kann beispielsweise das Drücken des Ellbogens des LBR III oder das Drehen einer Endflansches eines Industrieroboters in seinem letzten Drehgelenk in eine Richtung eine Geschwindigkeits- oder Andruckkraftzunahme, ein Ziehen bzw. Drehen in die entgegengesetzte Richtung eine Abnahme der Bahngeschwindigkeit bzw. der Andruckkraft bewirken.

Die Änderung der Bahngeschwindigkeit dx/dt kann auf verschiedene Arten realisiert werden. Beispielsweise kann zur Geschwindigkeitserhöhung ein vorgegebenen Geschwindigkeitstrapezprofil ds/dt(s) in Richtung der Zeitachse proportional verkürzt, zur Geschwindigkeitsverringerung gestreckt werden. Gleichermaßen kann einer einfachen Proportional-Differential-Regelung die nächste anzufahrende Lage der vorgegebenen Bahn früher bzw. später als Sollwert zugeführt werden, um die Geschwindigkeit zu erhöhen bzw. zu reduzieren.

Bevorzugt ist zu jeder Endeffektorlage der vorgegebenen Bahn eine der Manipulatorstellungen des Nullraumes als Soll-Manipulatorstellung vorgegeben. Hierzu kann beispielsweise bei der Bahnplanung eine der Manipulatorstellungen des Nullraumes entsprechend geeigneter Kriterien ausgewählt werden, etwa die Manipulatorstellung, deren Anfahren einen minimalen Zeit- oder Energieaufwand erfordert, oder deren Unterschied zu einer vorausgegangenen Stellung am geringsten ist. Das letztgenannte Kriterium kann beispielsweise ein unerwünschtes Umspringen zwischen verschiedenen Roboterstellungen beim Anfahren der nächsten Lage vermeiden. Bei der direkten Programmierung durch manuelles Führen des Manipulators ("direct teaching") ergibt sich die Sollstellung von selbst aus der jeweiligen Stellung, in die der Bediener den Manipulator beim Teachen bringt.

Als Ablage kann dann die Differenz dieser Soll- zu der tatsächlichen Manipulatorstellung erfasst werden. Wird der Manipulator durch den Bediener aus seiner Sollstellung bewegt, führt dies entsprechend zu einer dauernden Ablage, solange der Manipulator nicht wieder in der Sollstellung ist. Ist beispielsweise eine bestimmte, konstante Winkelstellung des Endeffektors eines sechsachsigen Roboters bezüglich seiner letzten Drehachse als Sollstellung vorgegeben, so führt eine bleibende Verdrehung des Endeffektors in dieser Drehachse durch den Bediener zu einer konstanten Ablage und einer entsprechenden Änderung der Prozessgröße, beispielsweise der Bahngeschwindigkeit.

Die Prozessgröße kann in einer ersten Ausführung der vorliegenden Erfindung der erfassten Ablage entsprechen, beispielsweise proportional zu dieser sein. Hierzu kann einer bestimmten Größe der Ablage, beispielsweise dem Betrag eines Differenzvektors der Gelenkwinkel des Manipulators eine entsprechend Prozessgröße zugeordnet werden. Im vorstehend genannten Beispiel kann etwa die Bahngeschwindigkeit durch die Winkelstellung des Endeffektors vorgegeben werden, i.e. jedem Winkel entspricht eine bestimmte Geschwindigkeit dx/dt.

In einer zweiten Ausführung kann einer bestimmten Größe der Ablage stattdessen auch eine Änderung der Prozessgröße zugeordnet werden, so dass der Manipulator beispielsweise seine Geschwindigkeit erhöht, solange ein Bediener eine Ablage erzeugt. Auch hier kann die Änderung proportional zur Ablage erfolgen, i.e. größere Ablagen die Prozessgröße stärker ändern. Eine Rückkehr zur ursprünglichen Prozessgröße erfordert in diesem Fall im Gegensatz zur ersten Ausführung nicht nur eine Rücknahme der Ablage, sondern zusätzlich eine anschließende Ablage in der entgegengesetzten Richtung.

Da die Ablage, insbesondere von einer dem Bediener unbekannten Sollstellung, von diesem nur schwer intuitiv erkannt wird, wird vorteilhafterweise eine Regelung zur Verringerung der Ablage durchgeführt. Lässt der Bediener den Manipulator los, kehrt dieser infolge der Regelung dann selbstständig in seine Sollstellung im Nullraum zurück. Dies ist zum einen vorteilhaft, wenn die Sollstellungen beispielsweise zur Kollisionsvermeidung des redundanten Manipulators vorgegeben werden. Zum anderen vereinfacht es die vorstehend beschriebene zweite Ausführung, da der Manipulator in seine Sollstellung im Nullraum zurückkehrt, wenn der Bediener keine Kraft mehr auf ihn ausübt, so dass die Prozessgröße solange geändert wird, solange der Bediener den Manipulator aktiv im Nullraum aus seiner Sollstellung bewegt, und der Manipulator anschließend mit der geänderten Prozessgröße weiterfährt.

Alternativ kann auch eine Regelung durchgeführt werden, die eine vom Benutzer geänderte Stellung im Nullraum als neuen Sollwert zugrundelegt. Dies ist insbesondere in Verbindung mit der vorstehend beschriebenen ersten Ausführung vorteilhaft, bei der der Bediener durch Auswahl einer der möglichen Manipulatorstellungen im Nullraum eine Prozessgröße vorgeben kann. Hierzu können beispielsweise anhand eines mathematischen Ersatzmodells des Manipulators und der neuen, vom Bediener vorgegebenen Manipulatorstellung Motormomente berechnet und als Sollwerte einer Kraftregelung zugeführt werden, die Gewichts-, Reibungs- und/oder dynamische Kräfte im Wesentlichen kompensieren und den Manipulator so in der neuen vorgegebenen Stellung halten.

Bevorzugt wird die Prozessgröße, beispielsweise die Bahngeschwindigkeit entsprechend einer Größe und/oder Richtung der erfassten Ablage geändert. Eine Änderung entsprechend der betragsmäßigen Größe, beispielsweise des Betrags eines Differenzvektors in den Gelenkwinkeln, ermöglicht das Abfahren der Bahn mit verschiedenen Geschwindigkeiten, die vom Bediener intuitiv durch größere oder kleinere Ablagen vorgebbar sind. Eine Änderung entsprechend der Richtung ermöglicht insbesondere ein Abfahren der vorgegebenen Bahn in umgekehrter Richtung.

Der Manipulator kann die vorgegebene Bahn lagegeregelt abfahren. Hierzu können beispielsweise die Sollstellungen im Nullraum vorgegeben sein und durch Proportional-Differential-Integral-(PID)-Regler nacheinander angefahren werden.

Gleichermaßen kann der Manipulator auch kraftgeregelt werden. Hierzu können beispielsweise anhand eines mathematischen Ersatzmodells des Manipulators die zum Abfahren der vorgegebenen Bahnen erforderlichen Drehmomente in den Motoren des Manipulators errechnet und als Sollwerte Kraftreglern der Motoren zugeführt werden.

Sowohl bei lage- als auch kraftgeregelten Manipulatoren ist es vorteilhaft, diese nachgiebig zu regeln, so dass ein Bediener manuell die Stellung des Manipulators im Nullraum ändern kann. Dies kann beispielsweise bei herkömmlichen Industrierobotern mit PID-Einzelgelenkregelung durch Reduzierung des Proportionalanteils und Deaktivieren des Integralreglers realisiert werden. Bei kraftgeregelten Manipulatoren können Kraftreglern der Motoren Sollwerte vorgegeben werden, die im Wesentlichen nur die Trägheits-, Reibungs- und Gewichtskräfte des Manipulators kompensieren.

Die Ablage kann anhand von Bewegungen und/oder Kräften in Gelenken des Manipulators erfasst werden. In der Regel verfügen die Bewegungsachsen eines Manipulators über eine Positionserfassung, beispielsweise über Drehgeber oder dergleichen. Anhand der Änderung in den einzelnen Gelenken kann dann eine Ablage des Manipulators im Nullraum erfasst werden. Gleichermaßen können auch, sofern entsprechende Kraftsensoren vorhanden sind, Kräfte gemessen werden, die ein Bediener auf den Manipulator ausübt, um ihn in seinem Nullraum zu bewegen. Vorliegend werden dabei gegensinnige Kräftepaare, i.e. Drehmomente verallgemeinernd ebenfalls als Kräfte bezeichnet.

In einer bevorzugten Ausführung der vorliegenden Erfindung ist ein Führungsgriff vorgesehen, der fest oder lösbar an dem Manipulator befestigt ist. An diesem Führungsgriff kann ein Bediener gezielt eine Ablage des Manipulators in seinem Nullraum hervorrufen, indem er den Manipulator mittels des Führungsgriffes bewegt. Durch einen solchen Führungsgriff wird eine Angriffsmöglichkeit geschaffen, die dem Bediener intuitiv klarmacht, wo und in welche Richtung er den Manipulator bewegen muss, um eine Ablage zu erzeugen. Bevorzugt können in dem Führungsgriff Bedienelemente vorgesehen sein, beispielsweise ein Sicherheitselement, dass aktiv bedient werden muss, um ein Verfahren des Manipulators, eine Bewegung des Manipulators im Nullraum durch den Bediener, oder eine manuelle Änderung der Prozessgröße zu ermöglichen.

Weitere Aufgaben, Merkmale und Vorteile ergeben sich aus den Unteransprüchen und den nachfolgenden Ausführungsbeispielen. Hierzu zeigt, teilweise schematisiert:
- Fig. 1: einen sechsachsigen Manipulator nach einer Ausführung der vorliegenden Erfindung;
- Fig. 2: einen siebenachsigen Manipulator nach einer weiteren Ausführung der vorliegenden Erfindung.
- Fig. 3: einen Leichtbauroboter nach einer weiteren Ausführung der vorliegenden Erfindung; und
- Fig. 4: ein Ablaufdiagramm eines Verfahrens nach einer Ausführung der vorliegenden Erfindung.

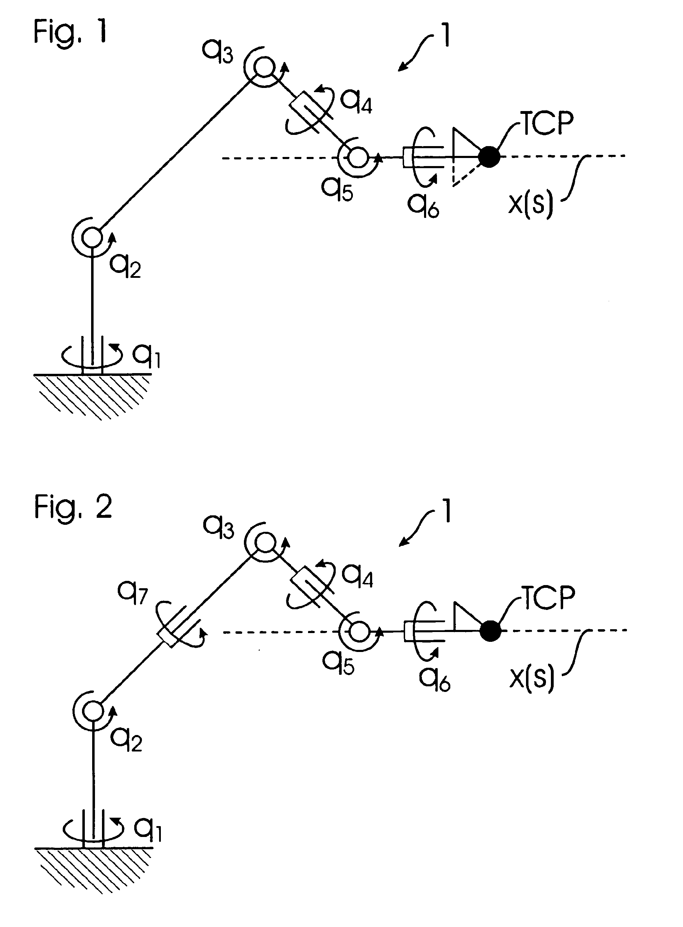

Fig. 1 zeigt einen Manipulator in Form eines sechsachsigen Roboters 1 nach einer Ausführung der vorliegenden Erfindung. Seine Stellung wird durch die Gelenkwinkel q = [q1, q2,...q6] beschrieben.

Der Endeffektor des Roboters 1, symbolisiert durch den Tool center point TCP, soll eine vorgegebene horizontale Bahn x(s) abfahren, die in Fig. 1 strichliiert angedeutet ist. Dabei ist der Winkel q6 des Endeffektors TCP nicht vorgegeben, da ein daran befestigtes Werkzeug (nicht dargestellt) rotationssymmetrisch zur sechsten, letzten Bewegungsachse des Roboters 1 ist. Die Lage x ∈ R⁵ des Endeffektors TCP kann daher beispielsweise durch drei kartesische Koordinaten und die beiden Winkel zur Zeichenebene bzw. zur Horizontalen in der Zeichenebene der Fig. 1 beschrieben werden.

Der sechsachsige Roboter 1 ist daher bezüglich der vorgegebenen Bahn x(s) redundant. I.e., er kann eine vorgegebene Lage x(s) des Endeffektors TCP, die nur durch die Gelenkwinkel q1,...q5 bestimmt ist, durch unendlich viele verschiedene Manipulatorstellungen [q1,...q5, q6 ∈ [0, 2π]) realisieren, die durch Drehung des Endeffektors TCP um die sechste Bewegungsachse auseinander hervorgehen und zusammen den Nullraum des Roboters 1 bezüglich der vorgegebenen Bahn x(s) bilden.

Zwei dieser Manipulatorstellungen, die alle derselben Endeffektorlage zugeordnet sind, sind in Fig. 1 gezeigt. Dabei ist eine erste Stellung q durchgezogen, eine zweite Stellung q' strichliiert dargestellt. Jede Stellung wird durch einen Vektor der Gelenkwinkel beschrieben: q = [q1, q2,...q6=0] ; q' = [q1', q2',...q6'= π].

Als Soll-Stellung qsoll im Nullraum ist die in Fig. 1 durchgezogene Stellung (q6 = 0) vorgegeben, da der Endeffektor TCP beim Teachen entsprechend geführt wurde.

Der Roboter fährt die vorgegebene Bahn x(s) mit seinem Endeffektor TCP in Betrieb standardmäßig mit einer konstanten Geschwindigkeit dx/dt = v ab. Hierzu werden Proportional-Integral-Reglern (nicht dargestellt) für die ersten fünf Bewegungsachsen alle 10 ms neue Sollwerte q1soll,..q5soll zugeführt, so dass der Roboter 1 jeweils in die neue Stellung q verfährt und dabei seinen Endeffektor TCP entlang der Bahn x(s) bewegt.

Der sechsten Achse ist ein reiner Proportionalregler (nicht dargestellt) aufgeschaltet, dessen Proportionalitätskonstante so gering gewählt ist, dass ein Bediener den Endeffektor TCP manuell um die sechste Bewegungsachse verdrehen kann.

In einer Steuervorrichtung (nicht dargestellt) des Roboters 1 wird unter anderem der Gelenkwinkel q6ist erfasst. Verdreht nun der Bediener den Endeffektor TCP, während der Roboter 1 die Bahn x(s) abfährt, erfasst die Steuereinrichtung die Ablage qist - qsoll, die im Ausführungsbeispiel einen Vektor [0,...0, q6ist - q6soll] bildet. Dessen Betrag |q6ist - q6soll| wird linear so skaliert, dass eine Verdrehung aus der Solllage um 0° einem Faktor K = 1, eine Verdrehung um +180° einem Faktor K = 2 und eine Verdrehung um -180° einem Faktor K = 0 entspricht. Die Steuervorrichtung bewegt nun den Endeffektor mit einer konstanten Geschwindigkeit K x v, indem beispielsweise bei K = 2 den Reglern für die ersten fünf Bewegungsachsen alle 5 ms die nächsten Sollwerte q1soll,..q5soll zugeführt werden. Verdreht entsprechend der Bediener den Endeffektor um -180°, hält der Roboter 1 den Endeffektor TCP zeitweise völlig an. Verdreht der Bediener den Endeffektor noch weiter, beispielsweise um insgesamt - 360°, fährt der Endeffektor TCP die vorgegebene Bahn x(s) mit der Geschwindigkeit -v rückwärts ab, indem nun für die ersten fünf Bewegungsachsen alle 10 ms die bereits abgefahrenen Sollstellungen in umgekehrter Reihenfolge sukzessive als neue Sollwerte vorgegeben werden.

Lässt der Bediener den Endeffektor TCP los, dreht der Proportionalregler für die sechste Achse den Endeffektor wieder in die Solllage q6soll = 0, die Steuervorrichtung ändert die Bahngeschwindigkeit entsprechend wieder auf v, da der Faktor K auf 1 zurückgeht.

Fig. 2 zeigt in Fig. 1 entsprechender Darstellung einen Manipulator in Form eines siebenachsigen Roboters 1 nach einer weiteren Ausführung der vorliegenden Erfindung. Seine Stellung wird entsprechend durch die Gelenkwinkel q = [q1, q2,...q7] beschrieben. Dabei sind der Ausführung gemäß Fig. 1 entsprechende Elemente durch gleiche Bezugszeichen bezeichnet, so dass zu deren Erläuterung auf die vorstehenden Ausführungen verwiesen werden darf und nachfolgend nur auf die Unterscheide eingegangen wird.

In der weiteren Ausführung soll der Endeffektor TCP wiederum die Bahn x(s) abfahren, wobei diesmal jedoch auch seine Orientierung um die gestrichelt eingezeichnete Bahn vorgegeben ist, um beispielsweise eine Schleifscheibe (nicht dargestellt) an einer Oberfläche entlang zu führen. Die Lage x ∈ R⁶ des Endeffektors TCP wird daher beispielsweise durch die Position des Endeffektors im Raum und dessen Orientierung, definiert durch drei Euler-Winkel, beschrieben. Da der Roboter 1 jedoch sieben Gelenke aufweist, ist er redundant, i.e. die vorgegebene Lage x des Endeffektors kann durch unendlich viele verschiedene Manipulatorstellungen dargestellt werden, die auseinander durch Drehung des übrigen Roboters 1 um die letzte Bewegungsachse eines festgehaltenen Endeffektors 6 bei inertialfester Basis hervorgehen und zusammen den Nullraum bilden. Als Sollstellung im Nullraum wird bei der Bahnplanung die energieoptimale Stellung, in der der Roboter 1 die geringsten statischen und dynamischen Kräfte aufbringen muss, bestimmt.

Der Roboter 1 verfügt über eine Admittanz-Regelung, die es ermöglicht, den Ellbogen, der durch das vierte Gelenk mit dem Gelenkwinkel q3 gebildet wird, manuell zu bewegen, wobei der Endeffektor TCP seine vorgegebene Lage x beibehält.

Bewegt der Bediener nun den Ellbogen in Richtung der vorgegebenen Bahn, i.e. nach rechts in Fig. 2, so erhöht die Steuervorrichtung, wie vorstehend beschrieben, entsprechend der Ablage, i.e. des Betrags des Differenzvektors qist - qsoll die Geschwindigkeit dx/dt, mit der der Endeffektor die vorgegebene Bahn x(s) abfährt. Lässt der Bediener den Ellbogen los, führt die Admittanz-Regelung ihn in die Sollstellung zurück, wodurch sich die Bahngeschwindigkeit wieder auf den Ausgangswert reduziert. Bewegt hingegen der Bediener den Ellbogen entgegen der vorgegebenen Bahn (nach links in Fig. 2), i.e. "hält" den die Bahn abfahrenden Roboter am Ellbogen, so verringert die Steuervorrichtung, wie vorstehend beschrieben, entsprechend der Ablage, i.e. des Betrags des Differenzvektors qist - qsoll die Geschwindigkeit dx/dt, mit der der Endeffektor die vorgegebene Bahn x(s) abfährt. Bewegt der Bediener den Ellbogen dabei entgegen der vorgegebenen Bahn entsprechend weit, so hält der Roboter 1 völlig an, i.e. reduziert seine Geschwindigkeit auf Null, oder fährt die bereits durchlaufene Bahn x(s) sogar rückwärts ab.

Durch die vorliegende Erfindung wird es daher ermöglicht, die Geschwindigkeit, mit der ein bezüglich einer vorgegebenen Bahn redundanter Roboter diese abfährt, einfach und direkt und damit entsprechend komfortabel zu ändern.

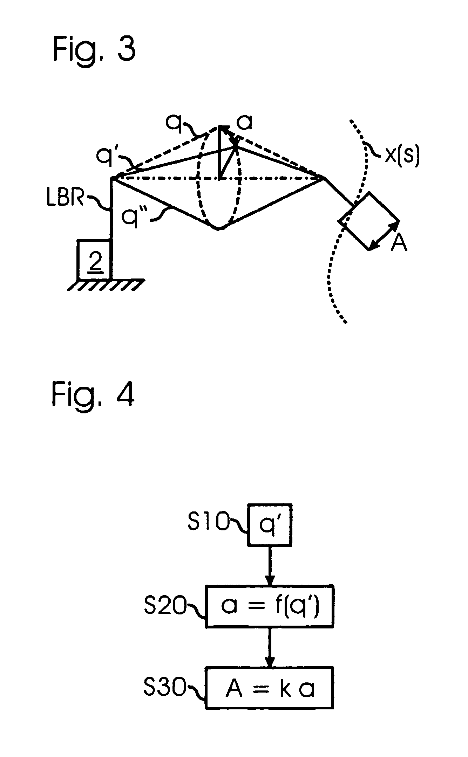

Fig. 3 zeigt in stark schematisierter perspektivischen Darstellung einen Leichtbauroboter LBR des Deutschen Zentrums für Luft- und Raumfahrt beim Abfahren einer vorgegebenen Bahn x(s) mit dem Tool Center Point seines Greifers. Die dargestellte Greiferlage kann der LBR durch mehrere Manipulatorstellungen realisieren, die jeweils durch seine Gelenkwinkel eindeutig bestimmt sind, und von denen in Fig. 3 eine erste, durch die Gelenkwinkel q definierte Manipulatorstellung strichliert, eine zweite, durch die Gelenkwinkel q' definierte Manipulatorstellung durchgezogen und eine dritte, durch die Gelenkwinkel q" definierte Manipulatorstellung punktiert eingezeichnet sind.

Als Ablage ist in diesem Ausführungsbeispiel der Winkel a zwischen der Vertikalen und dem Lot vom Ellbogen des LBRs auf die Verbindungslinie zwischen Schulter- und Handwurzelgelenk gewählt, der in der ersten Manipulatorstellung in Fig. 3 0°, in der zweiten Manipulatorstellung 30° und in der dritten Manipulatorstellung 180° beträgt.

Der Bediener kann den LBR nun in einer Nachgiebigkeitsregelung am Ellbogen anfassen und ihn längs einer in Fig. 3 strichliert dargestellten Kurve in seinem Nullraum bewegen, ohne dass die Endeffektorlage sich ändert. In einer Steuervorrichtung 2 des LBRs werden nun während des Abfahrens der vorgegebenen Bahn x(s) in einem Schritt S10 die Gelenkwinkel q' erfasst, die sich in der Manipulatorstellung ergeben, in die der Bediener den LBR bewegt. Hieraus berechnet die Steuervorrichtung 2 auf Basis der bekannten Kinematik des LBRs den Winkel a und öffnet den Greifer auf eine lichte Weite A, die sich ergibt, indem der Winkel a mit einer von Bediener vorab eingestellten Konstanten k multipliziert wird. Bewegt der Bediener den LBR also am Ellbogen längs der strichliert dargestellten Kurve in seinem Nullraum bei gleichbleibender Endeffektorlage von der ersten in die zweite Manipulatorstellung, öffnet sich der zunächst geschlossene Greifer. Bewegt der Bediener den LBR am Ellbogen längs der strichliert dargestellten Kurve bei gleichbleibender Endeffektorlage weiter von der zweiten in die dritte Manipulatorstellung, öffnet sich der Greifer noch weiter. Alternativ zur Greiferöffnung kann als Prozessgröße natürlich wie in den vorhergehenden Ausführungsbeispielen auch die Geschwindigkeit längs der Bahn x(s) geändert werden.

### Bezugszeichenliste

- 1: Roboter
- 2: Steuervorrichtung
- LBR: Leichtbauroboter
- q1, q2,...q7: Gelenkwinkel
- TCP: Tool Center Point
- x(s): Sollbahn

## Patentansprüche

1. Verfahren zum Abfahren einer vorgegebenen Bahn (x(s)) durch einen Endeffektor (TCP) eines Manipulators, insbesondere eines Roboters (1; LBR), wobei der Manipulator bezüglich der vorgegebenen Bahn einen Nullraum mit wenigstens zwei derselben Endeffektorlage zugeordneten Manipulatorstellungen (q, q', q") aufweist, mit dem Schritt:
- Erfassen einer manuell durch einen Bediener erzeugten Ablage (q - q'; a) des Manipulators in dem Nullraum (S10, S20);
**gekennzeichnet durch** den Schritt:
- Ändern wenigstens einer Prozessgröße (dx/dt; A) entsprechend der erfassten Ablage (S30).

2. Verfahren nach Anspruch 1, **dadurch gekennzeichnet, dass** in dem Nullraum zu jeder Endeffektorlage eine Soll-Manipulatorstellung (qsoll) vorgegeben wird und als Ablage die Differenz (qist - qsoll) der Soll- zu der tatsächlichen Manipulatorstellung erfasst wird.

3. Verfahren nach Anspruch 2, **dadurch gekennzeichnet, dass** eine Regelung zur Verringerung der Ablage durchgeführt wird.

4. Verfahren nach einem der vorhergehenden Ansprüche, **dadurch gekennzeichnet, dass** die Prozessgröße entsprechend einer Größe und/oder Richtung der erfassten Ablage geändert wird.

5. Verfahren nach Anspruch 4, **dadurch gekennzeichnet, dass** die Prozessgröße proportional zu der erfassten Ablage geändert wird.

6. Verfahren nach einem der vorhergehenden Ansprüche, **dadurch gekennzeichnet, dass** der Manipulator lagegeregelt wird.

7. Verfahren nach einem der vorhergehenden Ansprüche 1 bis 5, **dadurch gekennzeichnet, dass** der Manipulator kraftgeregelt wird.

8. Verfahren nach Anspruch 6 oder 7, **dadurch gekennzeichnet, dass** der Manipulator nachgiebig geregelt wird.

9. Verfahren nach einem der vorhergehenden Ansprüche, **dadurch gekennzeichnet, dass** die Ablage anhand von Bewegungen und/oder Kräften in Gelenken des Manipulators erfasst wird.

10. Verfahren nach Anspruch 9, **dadurch gekennzeichnet, dass** die Ablage anhand von Kräften in Gelenken des Manipulators auf Basis eines mathematischen Ersatzmodells des Manipulators erfasst wird.

11. Verfahren nach einem der vorhergehenden Ansprüche, **dadurch gekennzeichnet, dass** die Bahngeschwindigkeit durch eine Ablage im Wesentlichen auf Null reduzierbar ist.

12. Verfahren nach einem der vorhergehenden Ansprüche, **dadurch gekennzeichnet, dass** der Durchlaufsinn der vorgegebenen Bahn durch eine Ablage änderbar ist.

13. Steuervorrichtung (2) für einen Manipulator, insbesondere eines Roboters (1; LBR), mit einem Endeffektor (TCP), zur Durchführung eines Verfahrens nach einem der vorhergehenden Ansprüche, mit
- einer Erfassungseinrichtung zum Erfassen einer manuell durch einem Bediener erzeugten Ablage (q - q'; a) des Manipulators in dem Nullraum; und
- einer Änderungseinrichtung zum Ändern einer Prozessgröße (dx/dt; A) entsprechend der durch die Erfassungseinrichtung erfassten Ablage.

14. Steuervorrichtung nach Anspruch 13, **dadurch gekennzeichnet, dass** sie einen Führungsgriff umfasst, um den Manipulator (1) im Nullraum aus einer Manipulatorstellungen in eine andere Manipulatorstellungen zu bewegen, die derselben Endeffektorlage zugeordnet ist.

15. Manipulator (1), insbesondere Roboter, mit einer Steuervorrichtung nach Anspruch 13 oder 14, **dadurch gekennzeichnet, dass** der Manipulator wenigstens sieben Freiheitsgrade aufweist.

## Claims

1. Method to follow a predefined path (x(s)) by an end effector (TCP) of a manipulator, particularly a robot (1; LBR), wherein the manipulator has a null-space with respect to the defined path with at least two manipulator positions (q, q', q") that are related to the same positional configuration of the end effector, with the step:
- Detection of a displacement (q-q';a), which is manually generated by an operator, within the null-space (S10, S20);
**characterized by** the step:
- Alteration of at least one process parameter (dx/dt; A) according to the detected displacement (S30).

2. Method according to claim 1, **characterized in that** within the null-space at every positional configuration of the end effector a reference value of the manipulator position (qref) is predetermined and the displacement is detected as the difference (qact-qref) between the reference value and the actual position of the manipulator.

3. Method according to claim 2, **characterized in that** feedback control is used to diminish the displacement.

4. Method according to one of the preceding claims, **characterized in that** the process parameter is altered according to a parameter and/or direction of the detected displacement.

5. Method according to claim 4, **characterized in that** the process parameter is altered proportionally to the detected displacement.

6. Method according to one of the preceding claims, **characterized in that** the manipulator is position-controlled.

7. Method according to one of the preceding claims 1 to 5, **characterized in that** the manipulator is force-controlled.

8. Method according to claim 6 or 7, **characterized in that** the manipulator is controlled compliant.

9. Method according to one of the preceding claims, **characterized in that** the displacement is detected by motions and/or forces in the joints of the manipulator.

10. Method according to claim 9, **characterized in that** the displacement is detected by forces in the joints of the manipulator on the basis of a mathematical model of the manipulator.

11. Method according to one of the preceding claims, **characterized in that** the path velocity by a displacement is basically reducible to zero.

12. Method according to one of the preceding claims, **characterized in that** the direction of motion of the predefined path is alterable by a displacement.

13. Control device (2) for a manipulator, particularly a robot (1; LBR) with an end effector (TCP) for the execution of a method according to one of the preceding claims, with
- a detection device to detect a displacement (q-q'; a), which is manually generated by an operator, of the manipulator within the null-space; and
- an alteration device to alter a process parameter (dx/dt; A) according to the displacement as detected by the detection device.

14. Control device according to claim 13, **characterized in that** the control device comprises a handhold to move the manipulator (1) within the null-space from one position of the manipulator to another position of the manipulator, which is related to the same positional configuration of the end effector.

15. Manipulator (1), particularly a robot, with a control device according to claim 13 or 14, **characterized in that** the manipulator has at least 7 degrees-of-freedom.

## Revendications

1. Procédé pour permettre à un effecteur terminal (TCP) d'un manipulateur, en particulier d'un robot (1 ; LBR), de parcourir une trajectoire (x(s)) donnée, le manipulateur comportant par rapport à la trajectoire donnée un espace neutre avec au moins deux positions (q, q' , q") du manipulateur, associées aux mêmes positions de l'effecteur terminal, comportant l'étape :
- détection d'une dépose (q - q' ; a) du manipulateur dans l'espace neutre (S10, S20), effectuée manuellement par une personne de service ;
**caractérisé par** l'étape :
- variation d'au moins une grandeur du processus (dx/dt ; A) conformément à la dépose (S30) détectée.

2. Procédé selon la revendication 1, **caractérisé en ce qu'**une position de consigne (qsoll) est définie dans l'espace neutre pour chaque position de l'effecteur terminal, et la différence (qist - qsoll) entre la position de consigne et la position réelle du manipulateur est détectée comme étant une dépose.

3. Procédé selon la revendication 2, **caractérisé en ce qu'**il est effectué un réglage pour réduire la dépose.

4. Procédé selon l'une quelconque des revendications précédentes, **caractérisé en ce que** la grandeur du processus est modifiée en fonction d'une grandeur et/ou d'une direction de la dépose détectée.

5. Procédé selon la revendication 4, **caractérisé en ce que** la grandeur du processus est modifiée proportionnellement à la dépose détectée.

6. Procédé selon l'une quelconque des revendications précédentes, **caractérisé en ce que** le manipulateur est réglé en position.

7. Procédé selon l'une quelconque des revendications précédentes 1 à 5, **caractérisé en ce que** le manipulateur est réglé en force.

8. Procédé selon la revendication 6 ou 7, **caractérisé en ce que** le manipulateur est réglé en flexibilité.

9. Procédé selon l'une quelconque des revendications précédentes, **caractérisé en ce que** la dépose est détectée à l'appui des mouvements et/ou des forces dans les articulations du manipulateur.

10. Procédé selon la revendication 9, **caractérisé en ce que** la dépose est détectée à l'appui des forces dans les articulations du manipulateur sur la base d'un modèle de remplacement mathématique du manipulateur.

11. Procédé selon l'une quelconque des revendications précédentes, **caractérisé en ce que** la vitesse de la trajectoire peut être diminuée sensiblement à zéro par une dépose.

12. Procédé selon l'une quelconque des revendications précédentes, **caractérisé en ce que** le sens de parcours de la trajectoire donnée peut être modifié par une dépose.

13. Dispositif de commande (2) pour un manipulateur, en particulier un robot (1 ; LBR), comportant un effecteur terminal (TCP), destiné à la mise en oeuvre d'un procédé selon l'une quelconque des revendications précédentes, comportant
- un dispositif de détection pour détecter une dépose (q - q' a) du manipulateur dans l'espace neutre, effectuée manuellement par une personne de service ; et
- un dispositif de variation pour faire varier une grandeur du processus (dx/dt ; A) conformément à la dépose (S30) détectée.

14. Dispositif de commande selon la revendication 13, **caractérisé en ce qu'**il comporte une poignée de guidage, pour déplacer le manipulateur (1) dans l'espace neutre hors d'une position vers une autre position du manipulateur, laquelle est associée à la même position de l'effecteur terminal.

15. Manipulateur (1), en particulier robot, comportant un dispositif de commande selon la revendication 13 ou 14, **caractérisé en ce que** le manipulateur comporte au moins sept degrés de liberté.
